# EUROPEAN PATENT SPECIFICATION

(11) **EP 3 950 833 B1**
(45) Date of publication and mention of the grant of the patent: **22.10.2025**
(21) Application number: 20782688.4
(22) Date of filing: 23.03.2020
(51) Int. Cl.: C08K 3/16, C08J 3/075, C09K 5/06, C08F 220/56

(54) **SELF-HYGROSCOPIC HYDROGEL, PREPARATION METHOD THEREFOR AND THERMAL MANAGEMENT METHOD BASED ON SAME**
SELBSTHYGROSKOPISCHES HYDROGEL, HERSTELLUNGSVERFAHREN DAVON UND WÄRMEVERWALTUNGSVERFAHREN AUF BASIS DAVON
HYDROGEL AUTO-HYGROSCOPIQUE, PROCÉDÉ DE PRÉPARATION ASSOCIÉ ET PROCÉDÉ DE GESTION THERMIQUE BASÉ SUR CELUI-CI

(30) Priority: 02.04.2019 CN 201910260099
(43) Date of publication of application: 09.02.2022
(73) Proprietor: Sucool Technology (Shenzhen) Co., Ltd., Yuanshan Street, Longgang District Shenzhen Guangdong 518100 (CN)
(72) Inventor: HU, Xuejiao, Wuhan, Hubei 430072 (CN); LIU, Kang, Wuhan, Hubei 430072 (CN); PU, Shirui, Wuhan, Hubei 430072 (CN); CHU, Wenbin, Wuhan, Hubei 430072 (CN); LI, Liuxiang, Wuhan, Hubei 430072 (CN)
(74) Representative: Gille Hrabal Partnerschaftsgesellschaft mbB Patentanwälte
(86) International application number: PCT/CN2020/080587
(87) International publication number: WO 2020/199948

(56) References cited:
- WO-A1-2016/068129
- CN-A- 104 311 481
- CN-A- 104 311 841
- CN-A- 109 943 002
- US-A1- 2016 083 574
- US-A1- 2018 244 858
- US-A1- 2018 244 858
- NI TANG ET AL: "Thermal Transport in Soft PAAm Hydrogels", POLYMERS, vol. 9, no. 12, 8 December 2017 (2017-12-08), pages 688, XP055505536, DOI: 10.3390/polym9120688
- GUO JINHUA ET AL: "4D Printing of Robust Hydrogels Consisted of Agarose Nanofibers and Polyacrylamide", ACS MACRO LETTERS, vol. 7, no. 4, 22 March 2018 (2018-03-22), pages 442 - 446, XP093006117, ISSN: 2161-1653, DOI: 10.1021/acsmacrolett.7b00957
- LIN TINGRUI ET AL: "One-Pot Synthesis of a Double-Network Hydrogel Electrolyte with Extraordinarily Excellent Mechanical Properties for a Highly Compressible and Bendable Flexible Supercapacitor", vol. 10, no. 35, 8 August 2018 (2018-08-08), US, pages 29684 - 29693, XP093006312, ISSN: 1944-8244, Retrieved from the Internet <URL:https://pubs.acs.org/doi/pdf/10.1021/acsami.8b11377> [retrieved on 20221209], DOI: 10.1021/acsami.8b11377
- CUI SHUANG ET AL: "Bio-inspired effective and regenerable building cooling using tough hydrogels", APPLIED ENERGY, ELSEVIER SCIENCE PUBLISHERS, GB, vol. 168, 10 February 2016 (2016-02-10), pages 332 - 339, XP029482476, ISSN: 0306-2619, DOI: 10.1016/J.APENERGY.2016.01.058

## Description

### Field of the Invention

The present invention belongs to the technical field of heat dissipation, and relates to a heat dissipation technology, in particular to a self-hygroscopic hydrogel, a preparation method therefor and a thermal management method based on same.

### Background of the Invention

Almost all of the electron-emitting, computing and energy conversion devices, when in use, convert most of the energy into thermal energy, and if the heat cannot be dissipated in time, the temperature of the device will rise. High temperature will affect the performance of the device, such as affecting the service life of the diode, reducing the stability and reliability of the chip, reducing the energy conversion efficiency of the solar cell, and so on. Moreover, under the pushing of the molar law and the integrated circuit industry, the electronic equipment is developed in an integrated and miniaturized direction. Therefore, the problem of heat treatment even becomes a critical factor in whether the device can work normally. In addition to the serious heating problems of various electronic devices, the heating problems of houses, automobiles, aerospace equipment are also very severe, which seriously affects the comfort of the human body.

The heat dissipation method is mainly divided into two types: passive heat dissipation and active heat dissipation. Passive heat dissipation systems, such as fins, heat pipes etc., have the characteristics of simple structure, no noise, no extra electric energy consumption, but have limit on heat dissipation power, so that the passive heat dissipation systems are not suitable for heating bodies with higher heat dissipation requirements. Active heat dissipation systems, such as fans, thermoelectric refrigeration sheets, water-cooled machines, etc., are complex in structure, usually with bulky accessories, and have noise and electrical energy consumption, but have excellent heat dissipation capability. In the heat dissipation of small devices, passive heat dissipation devices are commonly used, such as graphite sheets and heat pipes. The thermal conductivity of the graphite sheet is limited, and therefore the heat dissipation capability is very difficult to improve; the structure of the heat pipe is complex, and the excessive high temperature of the hot end will also affect the refrigeration capacity of the cold end. The heat dissipation of large devices mainly adopts active heat dissipation, and the common heat dissipation devices are mainly fans, air conditioners, water cooling towers, etc., which have the problems of complex structure, high manufacturing cost and large volume at the same time except energy consumption. The heat dissipation of houses and automobiles mainly uses air conditioners. According to statistics, more than 40% of the energy consumption and greenhouse gas emissions are associated with the use of the air conditioners, and the refrigerant Freon will also destroy the ozone layer. In addition, the condition of power shortage, poor power supply reliability or power failure also limits the use of the air conditioners.

The hydrogel is a quasi-solid material with a water content of more than 90%, and can simulates the sweating-based heat dissipation process of creatures to cool down the heating body. When the surface temperature of the object rises, the hydrogel starts to sweat, and the moisture in the interior gradually evaporates, so that the surface temperature of the object can be greatly reduced. This heat dissipation method is not only simple in structure, but also remarkable in heat dissipation effect, and is an excellent passive heat dissipation material. However, the hydrogel needs to be taken out after sweating, and soaked into water before it can absorb water again, and then works normally. Frequent manual water supplementing not only affects the stability and effectiveness of the hydrogel, but also reduces the heat dissipation effect, further affects the usage experience of the consumer. Moreover, for large devices, the amount of hydrogel is huge, and manual water supplementing is impossible to achieve. Therefore, it is imperative to find an intelligent, efficient, simple, and widely used heat dissipation method, especially to find a hydrogel capable of achieving automatic water supplementing.

US20180244858A1 discloses hydrogel compositions, and corresponding methods of making. The hydrogels do not freeze, or only partially freeze, over a wide range of temperatures below the freezing temperature of water. Concurrently, these hydrogels also retain their room temperature mechanical properties (e.g., strength, modulus, elasticity) over a wide range of temperatures, including temperatures below the freezing temperature of water. The hydrogels are synthesized by adding a suitable amount of a salt together with previously cross-linked polymer gel. Hydration of the gel with aqueous solutions containing the prescribed salts not only depresses the hydrogel freezing point but protects the structure. For example, the salts do not allow the hydrogel to completely freeze, thus protecting the hydrogel from brittle failure. Whether the hydrogels partially freeze or remain non-frozen when chilled below the freezing temperature of water is determined by concentration of salt within the hydrogel.

CN104311841A discloses a hydrogel comprising a salt tolerance acrylamide-alginate hydrogel and a hygroscopic calcium chloride salt solution. It further discloses a preparation method for said acrylamide-alginate hydrogel including soaking the hydrogel in the hygroscopic calcium chloride salt solution.

US20160083574A1 discloses a method of forming a hybrid physically and chemically cross-linked double-network hydrogel with highly recoverable and mechanical properties in a single-pot synthesis is provided. The method comprises the steps of combining the hydrogel precursor reactants into a single pot. The hydrogel precursor reactants include water; a polysaccharide; a methacrylate monomer; an ultraviolet initiator; and a chemical crosslinker. Next the hydrogel precursor reactants are heated to a temperature higher than the melting point of the polysaccharide and this temperature is retained until the polysaccharide is in a sol state. Then the single-pot is cooled to a temperature lower than the gelation point of the polysaccharide and this temperature is retained to form a first network. Thereafter, photo-initiated polymerization of the methacrylate monomer occurs via the ultraviolet initiator to form the second network.Ni Tang et al. relates to the thermal conductivity and heat dissipation behaviors with change of water content of polyacrylamide hydrogel-based electronics.

Guo Jinhua et al. (4D Printing of Robust Hydrogels Consisted of Agarose Nanofibers and Polyacrylamide (ACS Macro Lett, 2018, 7, 442-446*))* discloses a self-hygroscopic hydrogel of agarose and acrylamide prepared with 2-hydroxy-4'-(2-hydroxyethoxy)-2-methylpropiophenone as photoinitiator and N,N'-methyl-bisacrylamide as crosslinker and a hygroscopic salt solution (Laponite RD).

Lin Tingrui et al. (One-Pot Synthesis of a Double-Network Hydrogel Electrolyte with Extraordinarily Excellent Mechanical Properties for a Highly Compressible and Bendable Flexible Supercapacitor (ACS Appl. Matter. Interfaces, 2018, 10, 29684-29693*))* discloses a self-hygroscopic hydrogel of agarose and acrylamide crosslinked with N,N'-methyl-bisacrylamide and a hygroscopic salt solution (Li₂SO₄).

CUI SHANG et al. (Bio-inspired effective and regenerable building cooling using tough hydrogels (Applied Energy 168 (2016) 332-339*))* discloses the preparation of hygroscopic acrylamide-alginate hydrogel and their applications for building cooling applications and potential cooling applications in the fields of electronics, occupational clothing, and batteries.

### Summary of the Invention

In order to solve the heat dissipation problem of various heating bodies, aiming at the problem that the hydrogel at the present stage cannot achieve automatic water supplementing, the present invention provides a thermal management system based on a self-hygroscopic hydrogel and a preparation method thereof, which has the characteristics of adjustable volume, zero noise, low manufacturing cost, intelligence and wide application range. The self-hygroscopic hydrogel can be directly laid on surfaces of various objects, and is suitable for heat dissipation of electronic equipment, houses, automobiles and so on.

In order to solve the above technical problem, the present invention adopts the following technical solution.

A self-hygroscopic hydrogel, wherein the self-hygroscopic hydrogel is a hygroscopic hydrogel composed of a salt-tolerance hydrogel and a hygroscopic salt solution.

A method for preparing a self-hygroscopic hydrogel, comprising the following steps:
step 1: preparing a salt-tolerance hydrogel;
step 2: heating and drying the salt-tolerance hydrogel prepared in step 1 until the hydrogel is completely dried;
step 3: soaking the dried hydrogel in a high-concentration hygroscopic salt, wherein the concentration of the hygroscopic salt is the corresponding concentration when the steam partial pressure inside the hygroscopic salt is less than steam partial pressure in the atmospheric environment and wherein the hygroscopic salt is lithium bromide, lithium chloride or calcium chloride salt solution. and
step 4: until the hydrogel is completely swollen, taking out the hydrogel to obtain the self-hygroscopic hydrogel.

As an improvement, the salt-tolerance hydrogel is acrylamide hydrogel, polyacrylamide hydrogel or 4-acetyl acryloyl ethyl acetate hydrogel.

As an improvement, the acrylamide hydrogel is prepared by the following steps:
successively adding acrylamide, N,N'-methylene bisacrylamide and 2-hydroxy-4'-(2-hydroxyethoxy)-2-methylpropiophenone into deionized water, and uniformly stirring;
adding agarose, and stirring until completely dissolved;
pouring the obtained solution into a mold for heating and molding;
placing the mold in cold storage; and
taking out the mold, and curing to obtain the acrylamide hydrogel.

As an improvement, in the preparation step of the acrylamide hydrogel, an ultraviolet lamp is adopted for curing under nitrogen atmosphere.

As an improvement, in the preparation step of the acrylamide hydrogel, the temperature of the mold for heating and molding is 60°C.

The hygroscopic salt is lithium bromide, lithium chloride or calcium chloride salt solution.

As an improvement, in step 2, the temperature of drying is 40°C to 90°C.

As an improvement, in step 2, the determination standard of complete drying is that the reduction rate of weight is less than 1%.

As an improvement, in step 4, the standard of complete swelling is that the increase rate of weight is less than 1%.

A thermal management method for a surface of a heating body using the method for preparing a self-hygroscopic hydrogel above, wherein the self-hygroscopic hydrogel is placed on the surface of the heating body; when the temperature of the surface of the heating body rises, the self-hygroscopic hydrogel starts to sweat, and the moisture in the interior of self-hygroscopic hydrogel gradually evaporates, so that the surface temperature of the heating body is greatly reduced; after the temperature of the surface of the heating body is reduced, the self-hygroscopic hydrogel spontaneously absorbs moisture in the surrounding air, so that the self-hygroscopic hydrogel is swollen again; and when the temperature of the surface of the heating body rises again, transpiration cooling are performed again, and so on, so that cooling and heat dissipation of the surface of the heating body are completed.

As an improvement, the heating body is a solar cell, a house, a brake pad, a chip or an integrated circuit.

The present invention has the following beneficial effects:
In conclusion, the present invention is different from traditional active heat dissipation and passive heat dissipation methods, although the self-hygroscopic hydrogel belongs to the passive heat dissipation method, it has the characteristics of simple structure and excellent heat dissipation capability, can simulate sweating-heat dissipation of creatures to intelligently perform effective heat dissipation for various objects which require heat dissipation (electronic equipment, houses, automobiles, etc.), and can realize automatic supplementing of moisture in a short time. The hygroscopic hydrogel is composed of a salt-tolerance hydrogel and a hygroscopic salt solution. The moisture in the air can be absorbed at a low temperature to carry out automatic water supplementing, the moisture evaporation at a high temperature can take away a large amount of heat, and the automatic cycle of moisture absorption and heat dissipation can be achieved. The device can automatically dissipate heat for the heating body without external power, and has the characteristics of no noise, small size, low manufacturing cost, convenience, intelligence, adjustable volume, zero noise, wide application range and remarkable heat dissipation effect.

### Brief Description of the Drawings

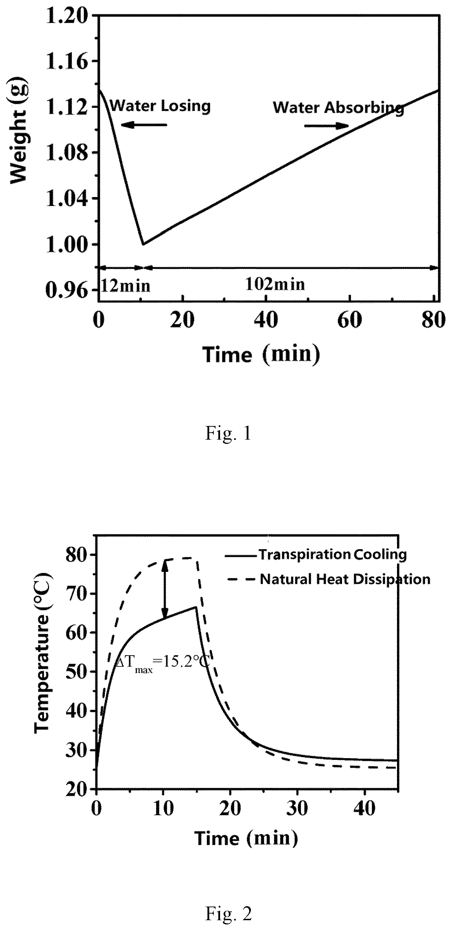

Fig. 1 is a schematic diagram of a moisture absorption performance of a self-hygroscopic hydrogel used in the embodiment;
Fig. 2 is a schematic diagram of a heat dissipation performance of a self-hygroscopic hydrogel used in the embodiment.

### Detailed Description of the Embodiments

The present invention provides a self-hygroscopic hydrogel for thermal management of a surface of a heating body, and the self-hygroscopic hydrogel is a hygroscopic hydrogel composed of a salt-tolerance hydrogel and a hygroscopic salt solution with a certain concentration. The salt-tolerance hydrogel is acrylamide hydrogel (AAM), polyacrylamide hydrogel, 4-acetyl acryloyl ethyl acetate hydrogel, etc. The hygroscopic salt solution is lithium bromide solution, lithium chloride solution, calcium chloride solution. The surface of the hygroscopic hydrogel is flat and smooth, and can directly cover the surface of the heating body that requires heat dissipation. The concentration of the hygroscopic salt solution in the hygroscopic hydrogel can be adjusted so as to achieve effective moisture absorption and refrigeration in different environments and at different surface temperatures of the heating body.

A method for preparing the self-hygroscopic hydrogel comprises the following steps:
step 1: preparing a salt-tolerance hydrogel, such as acrylamide hydrogel, polyacrylamide hydrogel, 4-acetyl acryloyl ethyl acetate hydrogel;
step 2: heating a quantitative hydrogel at 40°C to 90°C until the hydrogel is completely dried.
step 3, soaking the dried hydrogel in a high-concentration hygroscopic salt, such as lithium bromide, lithium chloride, calcium chloride, wherein the concentration of the hygroscopic salt is the corresponding concentration when the steam partial pressure inside the hygroscopic salt is less than steam partial pressure in the atmospheric environment.
step 4: until the hydrogel is completely swollen, taking out the hydrogel to obtain the self-hygroscopic hydrogel.

The determination standard of complete drying is that the reduction rate of weight is less than 1%, for example, with an interval of five minutes, the rate of change between two weighing is less than 1% of the total weight. The standard of complete swelling is that the increase rate of weight is less than 1%, for example, with an interval of five minutes, the rate of change between two weighing is less than 1% of the total weight.

In the present invention, when the temperature of the surface of the heating body, such as electronic equipment, house, automobile, etc., is too high, moisture in the self-hygroscopic hydrogel can be sweated and evaporated to dissipate the heat, and the evaporation will not be stopped until the steam partial pressure inside the self-hygroscopic hydrogel is gradually reduced to the environment steam partial pressure. When the electronic equipment is in standby, the house is in the nighttime and the automobile is not in use, the self-hygroscopic hydrogel can automatically absorb water at a certain environment temperature and humidity, and when the steam partial pressure inside the self-hygroscopic hydrogel is increased to be balanced with the environment steam partial pressure, the water absorption is stopped. The whole process is controlled by the concentration of the hygroscopic salt solution, so that the concentration of the hygroscopic salt solution can be regulated and controlled according to the temperature of the surface of the object and the temperature and humidity of the environment where the object is located, so as to achieve an automatic cycle of moisture absorption and heat dissipation.

The principle of the present invention: the moisture absorption principle is that the steam partial pressure of the hygroscopic salt solution is very low, which is much lower than the saturated vapor pressure of pure water at the same temperature and thus has strong hygroscopicity. The heat dissipation mechanism is similar to the mechanism of thermoregulation of creatures, and when the surface temperature of the heating body is too high, the moisture (i.e. "sweat") is released from the self-hygroscopic hydrogel (i.e. "skin"), and a large amount of heat is taken away from the evaporation phase change and mass transfer of the moisture. For example, when the environment temperature is 25°C and the relative humidity is 60%, the steam partial pressure is 1.9 MPa, and the steam partial pressure of the lithium bromide solution with a mass fraction of 50% at the same temperature is 0.77 MPa, the pressure difference between the environment and the solution can drive the steam in the air to diffuse to the solution to achieve moisture absorption. The steam partial pressure of the lithium bromide solution with a mass fraction of 45% at 45°C is 3.82 MPa, which is much higher than the steam (water vapor) partial pressure in the environment (25°C, relative humidity of 60%), and therefore evaporation heat dissipation can be achieved. It can be seen from the above principle that the present invention defines the high-concentration hygroscopic salt as a certain hygroscopic salt, the concentration thereof is the corresponding concentration when the steam partial pressure inside the hygroscopic salt is less than steam partial pressure in the atmospheric environment.

A specific method for preparing the self-hygroscopic hydrogel provided in this embodiment is as follows:
step 1: 8.53g of acrylamide, 0.0092g of N,N'-methylene bisacrylamide and 0.027g of 2-hydroxy-4'-(2-hydroxyethoxy)-2-methylpropiophenone are successively added into 60 mL of deionized water. The mixture is stirred uniformly in a magnetic stirrer;
step 2: 0.449g of agarose is added and stirred at 95°C until completely dissolved;
step 3: the solution obtained in step 2 is poured into a mold of 10*5*0.05 cm³, and the whole process is performed on a heating table, with a temperature of 60°C;
step 4: on the basis of step 3, the mold is placed in a refrigerator compartment (2-3°C) for 0.5 hour;
step 5: the mold is taken out from the refrigerator, and an ultraviolet lamp (60W) is adopted to cure the solution for 4 hours under a nitrogen atmosphere, so as to obtain an AAM hydrogel;
step 6: the AAM hydrogel is taken out from the mold and placed on the heating table at 70°C until completely dried;
step 7: the dried AAM hydrogel is immersed in a LiBr solution with a mass fraction of 45% for 2 hours;
step 8: the hydrogel is taken out, and the excess LiBr solution on the surface is wiped, then a hydrogel with automatic moisture absorption capability is formed.

In this embodiment, the automatic heat dissipation-moisture absorption performance test of the self-hygroscopic hydrogel used in portable electronic equipment is as follows.

The national average annual temperature and annual relative humidity are respectively about 25°C and 70%. In this environment, the heat dissipation is performed for a chip with a power of 2W. The concentration of the LiBr solution in the hygroscopic hydrogel can be determined to circulate at a concentration of 45% (evaporation) and a concentration of 55% (moisture absorption) according to environment temperature, humidity, and chip surface temperature. When the heat dissipation of chip is performed, the maximum temperature drops of 15.2°C can be achieved within 12 minutes, and the final concentration of the hygroscopic hydrogel is 55%. When the hygroscopic hydrogel automatically supplements water, the initial concentration of 45% can be recovered within 100 minutes.

## Claims

1. A method for preparing a self-hygroscopic hydrogel, comprising the following steps:
step 1: preparing a salt-tolerance hydrogel;
step 2: heating and drying the salt-tolerance hydrogel prepared in step 1 until the salt-tolerance hydrogel is completely dried;
step 3: soaking the dried hydrogel in a hygroscopic salt; and
step 4: until the hydrogel is completely swollen, taking out the hydrogel to obtain the self-hygroscopic hydrogel;
wherein in step 3, the concentration of the hygroscopic salt is the corresponding concentration when the steam partial pressure inside the hygroscopic salt is less than steam partial pressure in the atmospheric environment;
wherein the hygroscopic salt is lithium bromide, lithium chloride or calcium chloride salt solution.

2. The method for preparing the self-hygroscopic hydrogel according to claim 1, wherein the salt-tolerance hydrogel is acrylamide hydrogel, polyacrylamide hydrogel or 4-acetyl acryloyl ethyl acetate hydrogel.

3. The method for preparing the self-hygroscopic hydrogel according to claim 2, wherein the acrylamide hydrogel is prepared by the following steps:
successively adding acrylamide, N,N'-methylene bisacrylamide and 2-hydroxy-4'-(2-hydroxyethoxy)-2-methylpropiophenone into deionized water, and uniformly stirring;
adding agarose, and stirring until completely dissolved;
pouring the obtained solution into a mold for heating and molding;
placing the mold in cold storage; and
taking out the mold, and curing to obtain the acrylamide hydrogel.

4. The method for preparing the self-hygroscopic hydrogel according to claim 1, wherein in step 2, the temperature of drying is 40°C to 90°C.

5. A thermal management method for a surface of a heating body using the method for preparing a self-hygroscopic hydrogel according to any one of claims 1 to 4, **characterized in that** the self-hygroscopic hydrogel is placed on the surface of the heating body;
wherein when the surface temperature of the heating body rises, the self-hygroscopic hydrogel begins to sweat, and the internal moisture gradually evaporates, greatly reducing the surface temperature of the heating body; when the surface temperature of the heating body decreases, the self-hygroscopic hydrogel spontaneously absorbs the moisture in the surrounding air, making the self-hygroscopic hydrogel swell again; when the surface temperature of the heating body rises again, the self-hygroscopic hydrogel sweats again to cool down, and so on, completing the cooling and heat dissipation of the heating body.

6. The thermal management method for the surface of the heating body according to claim 5, wherein the heating body is a solar cell, a house, a brake pad, a chip or an integrated circuit.

7. A self-hygroscopic hydrogel, **characterized in that** the self-hygroscopic hydrogel is prepared by the method according to any one of claims 1 to 4.

## Patentansprüche

1. Verfahren zur Herstellung eines selbsthygroskopischen Hydrogels, umfassend die folgenden Schritte:
Schritt 1: Herstellen eines salztoleranten Hydrogels;
Schritt 2: Erhitzen und Trocknen des in Schritt 1 hergestellten salztoleranten Hydrogels, bis das salztolerante Hydrogel vollständig getrocknet ist;
Schritt 3: Einweichen des getrockneten Hydrogels in einem hygroskopischen Salz; und
Schritt 4: Herausnehmen des Hydrogels, bis es vollständig gequollen ist, um das selbsthygroskopische Hydrogel zu erhalten;
wobei in Schritt 3 die Konzentration des hygroskopischen Salzes der entsprechenden Konzentration entspricht, wenn der Dampfpartialdruck innerhalb des hygroskopischen Salzes geringer ist als der Dampfpartialdruck in der Umgebungsatmosphäre;
wobei das hygroskopische Salz eine Lithiumbromid-, Lithiumchlorid- oder Calciumchloridsalzlösung ist.

2. Verfahren zur Herstellung des selbsthygroskopischen Hydrogels nach Anspruch 1, wobei das salztolerante Hydrogel Acrylamidhydrogel, Polyacrylamidhydrogel oder 4-Acetylacryloylethylacetat-Hydrogel ist.

3. Verfahren zur Herstellung des selbsthygroskopischen Hydrogels nach Anspruch 2, wobei das Acrylamid-Hydrogel durch die folgenden Schritte hergestellt wird:
nacheinander werden Acrylamid, N,N'-Methylenbisacrylamid und 2-Hydroxy-4'-(2-hydroxyethoxy)-2-methylpropiophenon in entionisiertes Wasser gegeben und gleichmäßig gerührt;
Agarose wird hinzufügen und gerührt, bis sich alles vollständig aufgelöst hat;
Gießen der erhaltenen Lösung in eine Form zum Erhitzen und Formen;
die Form in einen Kühlraum stellen; und
Herausnehmen der Form und Aushärten, um das Acrylamid-Hydrogel zu erhalten.

4. Verfahren zur Herstellung des selbsthygroskopischen Hydrogels nach Anspruch 1, wobei in Schritt 2 die Trocknungstemperatur 40 °C bis 90 °C beträgt.

5. Wärmemanagementverfahren für eine Oberfläche eines Heizkörpers unter Verwendung des Verfahrens zur Herstellung eines selbsthygroskopischen Hydrogels gemäß einem der Ansprüche 1 bis 4, **dadurch gekennzeichnet, dass** das selbsthygroskopische Hydrogel auf die Oberfläche des Heizkörpers aufgebracht wird;
wenn die Oberflächentemperatur des Heizkörpers steigt, beginnt das selbsthygroskopische Hydrogel zu schwitzen, und die innere Feuchtigkeit verdunstet allmählich, wodurch die Oberflächentemperatur des Heizkörpers stark sinkt;
wenn die Oberflächentemperatur des Heizkörpers sinkt, nimmt das selbsthygroskopische Hydrogel spontan die Feuchtigkeit aus der Umgebungsluft auf, wodurch das selbsthygroskopische Hydrogel wieder aufquillt,
wenn die Oberflächentemperatur des Heizkörpers wieder ansteigt, schwitzt das selbsthygroskopische Hydrogel erneut, um sich abzukühlen, und so weiter, wodurch die Kühlung und Wärmeableitung des Heizkörpers abgeschlossen wird.

6. Verfahren zum Wärmemanagement für die Oberfläche des Heizkörpers nach Anspruch 5, wobei der Heizkörper eine Solarzelle, ein Haus, ein Bremsbelag, ein Chip oder eine integrierte Schaltung ist.

7. Selbsthygroskopisches Hydrogel, **dadurch gekennzeichnet, dass** das selbsthygroskopische Hydrogel nach einem der Verfahren gemäß den Ansprüchen 1 bis 4 hergestellt ist.

## Revendications

1. Procédé de préparation d'un hydrogel auto-hygroscopique, comprenant les étapes suivantes :
| | |
|---|---|
| étape 1 : | préparer un hydrogel tolérant au sel ; |
| étape 2 : | chauffer et sécher l'hydrogel tolérant au sel préparé à l'étape 1 jusqu'à ce que l'hydrogel tolérant au sel est complètement séché |
| étape 3 : | tremper l'hydrogel séché dans un sel hygroscopique ; et |
| étape 4 : | jusqu'à ce que l'hydrogel est complètement gonflé, retirer l'hydrogel pour obtenir l'hydrogel auto-hygroscopique ; |
dans lequel, à l'étape 3, la concentration du sel hygroscopique est la concentration correspondante lorsque la pression partielle de vapeur à l'intérieur du sel hygroscopique est inférieure à la pression partielle de vapeur dans l'environnement atmosphérique ;
dans lequel le sel hygroscopique est une solution saline de bromure de lithium, de chlorure de lithium ou de chlorure de calcium.

2. Le procédé de préparation de l'hydrogel auto-hygroscopique selon la revendication 1, dans lequel l'hydrogel tolérant au sel est de l'hydrogel d'acrylamide, de l'hydrogel de polyacrylamide ou de l'hydrogel de 4-acétylacryloyléthylacétate.

3. Le procédé de préparation de l'hydrogel auto-hygroscopique selon la revendication 2, dans lequel l'hydrogel d'acrylamide est préparé par les étapes suivantes :
ajouter successivement de l'acrylamide, du N,N'-méthylène bisacrylamide et du 2-hydroxy-4'-(2-hydroxyéthoxy)-2-méthylpropiophénone dans de l'eau déionisée, et agiter uniformément ;
ajouter de l'agarose et agiter jusqu'à dissolution complète ;
verser la solution obtenue dans un moule pour chauffer et mouler ;
placer le moule dans un entreposage frigorifique ; et
retirer le moule et durcir pour obtenir l'hydrogel d'acrylamide.

4. Le procédé de préparation de l'hydrogel auto-hygroscopique selon la revendication 1, dans lequel, à l'étape 2, la température de séchage est de 40 °C à 90 °C.

5. Procédé de gestion thermique pour une surface d'un corps chauffant utilisant le procédé de préparation d'un hydrogel auto-hygroscopique selon l'une quelconque des revendications 1 à 4, **caractérisé en ce que** l'hydrogel auto-hygroscopique est placé sur la surface du corps chauffant ;
dans lequel, lorsque la température de surface du corps chauffant augmente, l'hydrogel auto-hygroscopique commence à transpirer et l'humidité interne s'évapore progressivement, réduisant considérablement la température de surface du corps chauffant ; lorsque la température de surface du corps chauffant diminue, l'hydrogel auto-hygroscopique absorbe spontanément l'humidité de l'air ambiant, faisant gonfler l'hydrogel auto-hygroscopique à nouveau ; lorsque la température de surface du corps chauffant augmente à nouveau, l'hydrogel auto-hygroscopique transpire à nouveau pour refroidir, et ainsi de suite, achevant ainsi le refroidissement et la dissipation thermique du corps chauffant.

6. Le procédé de gestion thermique de la surface du corps chauffant selon la revendication 5, dans lequel le corps chauffant est une cellule solaire, une maison, une plaquette de frein, une puce ou un circuit intégré.

7. Hydrogel auto-hygroscopique, **caractérisé en ce que** l'hydrogel auto-hygroscopique est préparé par le procédé selon l'une quelconque des revendications 1 à 4.
